# EUROPEAN PATENT APPLICATION

(11) **EP 3 113 568 A1**
(43) Date of publication of application: **04.01.2017**
(21) Application number: 15755238.1
(22) Date of filing: 24.02.2015
(51) Int. Cl.: H04W 74/04, H04W 4/04, H04W 28/04

(54) **WIRELESS COMMUNICATION SYSTEM, WIRELESS COMMUNICATION DEVICE, WIRELESS COMMUNICATION METHOD, AND PROGRAM**

(30) Priority: 27.02.2014 JP 2014036636
(71) Applicant: Omron Corporation, Kyoto-shi, Kyoto 600-8530 (JP)
(72) Inventor: NGUYEN Manh Tai, Kyoto-shi Kyoto 600-8530 (JP); SAITO Keisuke, Kyoto-shi Kyoto 600-8530 (JP)
(74) Representative: Kilian Kilian & Partner
(86) International application number: PCT/JP2015/055150
(87) International publication number: WO 2015/129664

(57) **Abstract**

A parent node in a wireless communication system includes a generating means configured to generate a send request including response instruction data specifying child nodes required to respond, and a response timing for each of the child nodes required to respond; and The response instruction data may list data representing whether or not a response is required for each of the child nodes in order in accordance with individual identification information for each of the child nodes. A child node in a wireless communication system according to embodiments of the invention includes a receiving unit configured to receive the send request; a response determination unit configured to determine from the response instruction data whether or not the child node itself is required to respond to the send request; and a response transmission unit configured to transmit a response at a response timing based on the response instruction data, when the child node is required to respond to the send request.

## Description

### FIELD

The present invention relates generally to wireless communication, and more specifically to controlling the timing of transmissions.

### BACKGROUND

The increasing popularity of wireless communication technologies and the standardization of SensorNet technologies have promoted the adoption of wireless communication technologies in factory automation (FA). Control-related communications must be highly reliable and must provide fast response speeds; thus sufficient reliability and response speeds must be guaranteed when providing these kinds of communications wirelessly.

However, with wireless communications, contention or noise may prevent proper communication. Thus, information may be retransmitted to guarantee reliability. For instance, a sender node resends data when it is clear that the data sent from the sender node has not been properly received at the destination node.

Patent Document 1 proposes a method of controlling retransmissions for Time Division Multiple Access (TDMA) technology. In concrete terms, the data for transmission is divided into small data blocks, and each of the data blocks are assigned an error detection code. A receiver node performs error detection on a data block, and sends the sender node a resend request containing information indicating the position of the data block containing an error. Prompted by the resend request, the sender node resends the designated data block. Thus, the efficiency of retransmission improves because only a small subdivision of the data, the data block, is resent.

Patent Document 2 proposes a retransmission control protocol wherein a child node responds to a parent node that broadcasts a packet. More specifically, the child node receiving the broadcast packet from the parent node, first uses the time slot assigned to itself to send a response packet. The parent node sends a rebroadcast packet containing a response verification that provides the identification information for all the child nodes that succeed in responding to the broadcast. When a child node receiving the rebroadcast packet determines that the response packet sent thereby was not properly received, the child node randomly selects from the time slots assigned to other child nodes with successful receptions, and resends the response packet. This configuration shortens the transmission time of a resend request command, and reduces the likelihood of transmission contention between child nodes.

### CITATION LIST

### Patent Documents

Patent Document 1: Japanese Unexamined Patent Application Publication No. H9-284261
Patent Document 2: Japanese Unexamined Patent Application Publication No. 2010-213162

### SUMMARY

### Technical Problem

The technique described in Patent Document 1 assumes one-to-one communication; therefore, if the receiver node is communicating with multiple nodes, repeated retransmissions to and from a single node delays the transmission timing for the next node.

The technique described in Patent Document 2 uses a broadcast, and thus does not encounter the above-mentioned problem. Despite that, because the timing of the retransmission is selected at random, the transmission timing is irregular, and the amount of delay is random. For instance, when only a single child node needs to resend, the child node can resend immediately to shorten the delay, however, the selection of the time slot may increase the amount of delay until the resend is performed.

While a low delay is required in wireless communications, existing methods are unable to provide sufficient results and what is desired is a method capable of ensuring even less delay. The above mentioned examples describe retransmission; however, without being limited to cases of retransmission, it is preferable that there is little delay in a node transmitting a response to a request.

With these issues in mind, embodiments of the invention provide wireless communication techniques capable of communication with little delay.

### Solution to Problem

To address the above-mentioned shortcomings, a first embodiment of the invention is a wireless transmission system that includes a parent node and a plurality of child nodes, and carries out wireless communication between the parent node and the child nodes; the wireless communication system is configured so that when the parent node sends the child nodes a send request, the parent node also notifies each child node in the plurality of child nodes whether or not a response is required, and when a response is required, the response timing (transmission timing).

More specifically, the parent node in a wireless communication system according to the embodiment includes a generating means configured to generate a send request including response instruction data specifying child nodes required to respond, and a response timing for each of the child nodes required to respond; and a transmitting unit configured to transmit the send request. Further, the child node in a wireless communication system according to embodiments of the invention includes a receiving unit configured to receive the send request; a response determination unit configured to determine from the response instruction data whether or not the child node itself is required to respond to the send request; and a response transmission unit configured to transmit a response at a response timing based on the response instruction data, when the child node is required to respond to the send request.

This configuration allows embodiments of the invention to fix the maximum delay time for a response without generating differences in the response timing for child nodes because the parent node specifies the response timing for a child node.

In the embodiment, when the number of child nodes required to respond is N (where N is an integer), the timing at which the child node should respond may be any one of 1 to N slots after the send request and does not overlap with the response timing for any of the child nodes required to respond. With this configuration all child nodes that must respond are able to complete a response within the shortest delay time.

In the embodiment, the response instruction data may list data representing whether or not a response is required for each of the child nodes in order in accordance with individual identification information for each of the child nodes; the data including whether or not a node is required to respond may be expressed by a single bit or a plurality of bits. Note that, the size of the response instruction data decreases when whether or not a node should respond is expressed in a single bit.

In this embodiment, the timing at which the child node should respond may be determined on the basis of the order in which the data representing that the child node is required to respond is presented in the data representing that a response is required. With this configuration, data indicating whether or not a response is required also serves to specify the response timing, thus controlling the amount of data transceived. Additionally, the data indicating whether or not a response is required may be expressed as a single bit, making it possible to minimize the amount of data needed to provide notice of the response timing.

In this embodiment, if the parent node does not receive a response from a child node, the parent node may retransmit a send request including response instruction data specifying that the child node is a child node required to respond for up to N slots after a send request is transmitted. With this configuration the retransmission process carried out by the child node can be performed with little delay when the parent node sends the child node a request to retransmit data.

In this embodiment, on receiving a response from a child node after transmitting a send request, the parent node may update the response instruction data to indicate that a response is not required from said node; and when retransmitting a send request, the parent node may include the updated response instruction data in the send request. This configuration allows the parent node to update the response instruction data to determine from which child node a response has been received. Thus, simply sending a send request that includes the updated (most recent) response instruction data can serve as a request to the child node for retransmission.

In this embodiment, when there is a child node from which a response is not received despite repeating retransmission of a send request a predetermined number of times, the parent node may use the response instruction data to output from which of the child nodes a response has not been received. Further, when there is a child node from which a response is not received despite repeating retransmission of a send request a predetermined number of times, the parent node may treat this as an error. According to embodiments of the invention, because the most recent response instruction data indicates from which of the child nodes a response has not been received, simply outputting the response instruction data can serve as a notice of the child nodes that cannot provide a response.

The invention may be implemented as a wireless communication system or a wireless communication device including at least a portion of the above-described means. The invention may also be implemented as a wireless communication method including at least a portion of the above described processes; furthermore, this wireless communication method may be implemented as a computer program for execution on a computer, or as the aforementioned computer program recorded on a computer readable medium. The above-mentioned configurations and processes may be freely combined with each other insofar as is technically possible to implement the invention.

### Effects

Embodiments of the invention provide low delay in communication when a child node transmits a response in accordance with a send request from a parent node.

### BRIEF DESCRIPTION OF THE DRAWINGS

FIG. 1 is an overview of a sensor data-transmission system according to an embodiment;
FIG. 2 is a diagram for describing the communication process in the sensor data-transmission system according to the embodiment;
FIG. 3 illustrates a configuration of a send request frame and a response frame;
FIG. 4 is a functional block diagram illustrating the configuration of a base transceiver (PLC);
FIG. 5 is a functional block diagram illustrating the configuration of a node (sensor);
FIG. 6 is a flow chart depicting the flow of a process in the base transceiver for transmitting a send request command;
FIG. 7 is a flow chart depicting the flow of a response reception process in the base transceiver;
FIG. 8 is a flow chart depicting the flow in a response transmission process in the node;
FIG. 9 is a flow chart depicting the flow in a process for calculating the response timing; and
FIG. 10 illustrates example modifications to response instruction data.

### DETAILED DESCRIPTION

Various forms of implementing the invention are described in detail below on the basis of embodiments thereof and with reference to the drawings. However, unless explicitly stated, the dimensions, materials, shapes, and relative arrangements of constituent components of the embodiments described here are not meant as limitations to the scope of the invention.

### Overview

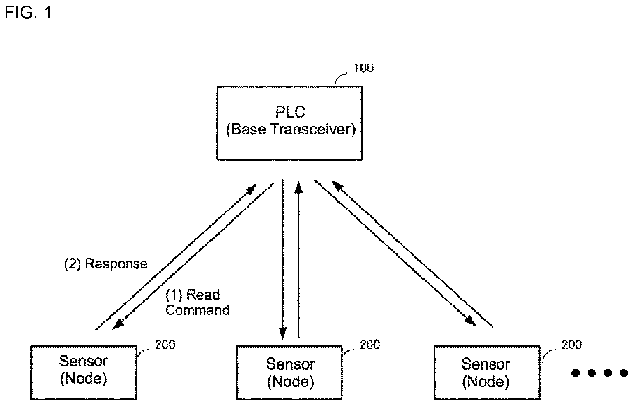

FIG. 1 is an overview of a sensor data transmission system using a wireless communication system according to embodiments of the invention. As illustrated in FIG. 1, a sensor theta transmission system according to the embodiment is configured from a programmable logic controller (PLC) 100, and sensors 200, with sensor data transmitted between the PLC 100 and a sensor 200 via wireless communication. More specifically, the PLC 100 and a sensor 200 function as a base transceiver (parent node) and a node (child node) respectively; the sensor 200 transmits sensor data to the base transceiver on the basis of a request for sensor data (read command) from the PLC 100.

Note that although only three nodes are illustrated in FIG. 1, any desired number of nodes may be used. Furthermore, the number of nodes in the embodiment are preliminarily determined and assumed to neither increase nor decrease during operation.

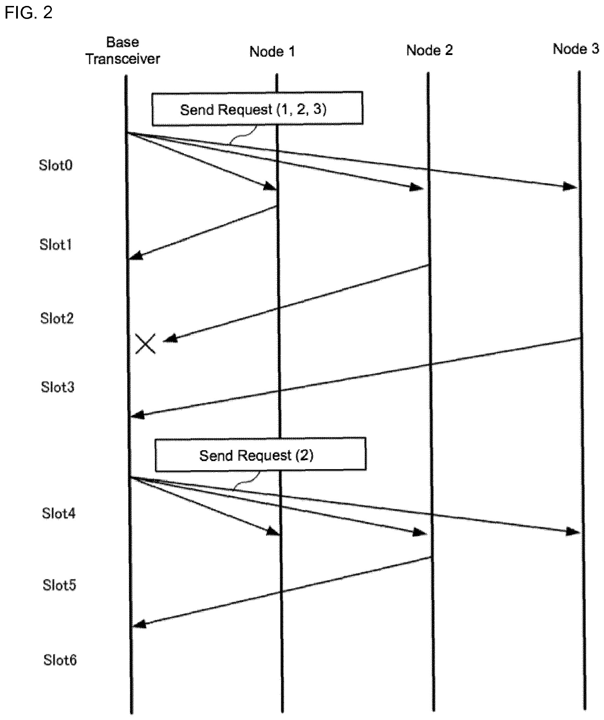

The process for communicating sensor data in the embodiment is described with reference to FIG. 2. First, the base transceiver 100 broadcasts a send request, requesting the nodes 200 to transmit sensor data. The send request includes information indicating which nodes must respond, and information indicating the transmission response timing for each of the nodes required to respond. Hereafter these pieces of information are referred to as response instruction data.

In time slot 0, the base transceiver 100 requests the nodes 1 - 3 to send sensor data (FIG. 2). That is, the base transceiver 100 generates response instruction data specifying that each of the nodes 1 - 3 transmits a response at a transmission timing in order from first to third respectively; the base transceiver 100 then broadcasts a send request including the response instruction data.

Each of the nodes transmit a response to the base transceiver which includes the sensor data on the basis of the response instruction data included in the send request. Here, the response from the node 2 is not properly received at the base transceiver due to collision or the like (time slot 2). In that case, the base transceiver broadcasts a send request with response instruction data instructing that only the node 2 is to respond, and thereby instructs the node 2 to retransmit the response (time slot 4). At this point, the node 2 is instructed to transmit a response during the first response timing. In the example in FIG. 2, the node 2 transmits a response at the time slot 5 because the base transceiver transmits the send request at the time slot 4. Thus, having the base transceiver instruct the node to use a response timing that is immediately after the send request makes it possible to reduce a delay in when a response is transmitted.

### Structure of a Frame

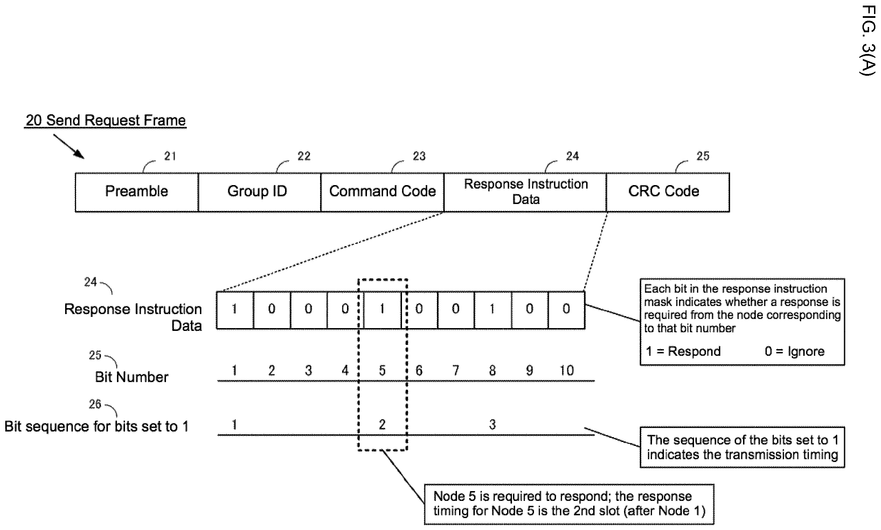

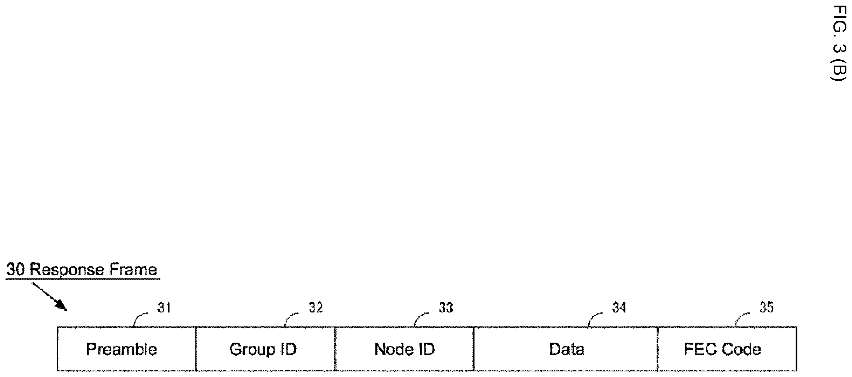

In the embodiment, the structure of the send request frame sent by the base transceiver 100, and the response frame sent by the node 200 is described with reference to FIG. 3. The structure is described assuming there are 10 nodes in the system.

As illustrated in FIG. 3(A), a send request frame 20 includes a preamble 21, a group ID 22, a command code 23, response instruction data 24, and a CRC code 25. The preamble 21 is added at the start of the data; in order to establish synchronization the preamble is a bit string of a predetermined pattern. A group ID 22 identifies a group consisting of the base transceiver 100 and the nodes 200. The command ID 23 identifies the type of request (command) from the base transceiver 100 to the nodes 200. For instance, when requesting the transmission of sensor data, and ID corresponding to that command is stored as a command code. The CRC code 25 is a checksum used for detecting errors.

The response instruction data 24 stores information indicating which nodes must respond, and information indicating the response timing when a response is required. In this embodiment, the number of bits in the response instruction data 24 is the same as the number of nodes within a group, with a single bit designating whether or not a response is required for single node. In the example illustrated in FIG. 3(A), the response instruction data 24 includes 10 bits because there are 10 nodes. Note that the rules for which bit in the response instruction data indicates which node must respond may be defined in advance. For instance, the first bit in the response instruction data 24 may signify whether or not a node with an individual identification information (node ID) of "1" should respond, while the second bit signifies whether or not a node with a node ID of "2" should respond. In this embodiment, a bit value of "1" indicates that a response is required, and a bit value of "0" indicates that a response is not required. Further, counting only the bits in the response instruction data 24 with the value of "1" from the first bit to the node required to respond, the resulting count may be used as the order of the response timing for the node.

When the response instruction data 24 is a bit string "1000100100" as illustrated in FIG. 3(A), the first, fifth, and eighth bits are set to "1", and therefore a response is required from the nodes with the node ID 1, 5, and 8. Additionally, because bit 1 is the first bit with the value "1", bit 5 is the second bit with the value "1", and the bit 8 is the third bit with the value "1", the node with node ID 1 transmits first, the node with node ID 5 transmits second, and the node with node ID 8 transmits third.

Thus, if configured in this manner the indication of whether or not each node is required to respond and the response timing can be specified with a number of bits equal to the number of nodes.

As illustrated in FIG. 3(B), the response frame 30 transmitted by a node includes a preamble 31, a group ID 32, a node ID 33, data 34, and an FEC code 35. The preamble 31 and the group ID 32 are identical to the preamble 21 and the group ID 22 included in a send request frame 20. The node ID 33 stores the node ID (individual identification information) of the node sending the response frame 30. The dates on 34 stores the sensor data measured by the node 200 (sensor). The FEC code 35 is a correction code for use with the previous detection code.

### Configuration

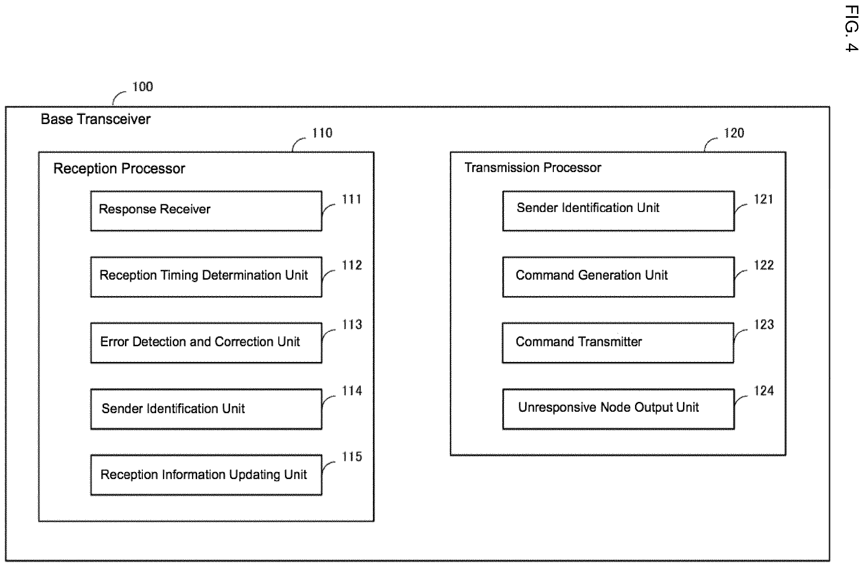

The configuration of a base transceiver 100 and a node 200 are described below in detail. First, the configuration of the base transceiver 100 is described with reference to FIG. 4.

### The Base Transceiver

A base transceiver 100 includes a reception processor 110, and a transmission processor 120. The reception processor 110 includes a response receiver 11, a reception timing determination unit 112, an error detection and correction unit 113, a sender identification unit 114, and a reception information updating unit 115. The transmission processor 120 includes a target designation unit 121, a command generator 122, a command transmitter 123, and an unresponsive node output unit 124. In the embodiment, the base transceiver 100 is a computer containing a central processing unit (CPU), and memory, and the like, and is capable of implementing each of the above-mentioned functions through the CPU executing a program stored in memory. However, the above mentioned functions may be implemented in whole or in part as hardware circuits.

The response receiver 111 filters, demodulates, and decrypts the wireless signals received via antenna to receive the data transmitted wirelessly thereto. Any desired and known methods may be adopted for this reception processing.

The reception timing determination unit 112 identifies the number of the current time slot in which data is being received. A slot can be identified based on the amount of time that has elapsed since a send request was transmitted.

The error detection and correction unit 113 detects whether or not there is an error in the data received, and corrects the error if possible. Note that the error detection function may be provided by itself without providing an error correction function. While the cyclic redundancy check and the forward error correction are used in the embodiment, other desired algorithms may be used.

The sender identification unit 114 identifies the sender node of the data received. Because the data sent from a node includes the group ID and the node ID (Node ID 53, FIG. 3(B)), the sender identification unit 114 is able to identify the sender from the group ID and the node ID.

The reception information updating unit 115 manages the information on which nodes have already sent a response. The reception information updating unit 115 updates information on nodes that already sent a response each time a response is received from a node. As above described, the base transceiver 100 includes information indicating which nodes are required to respond in the send request frame and transmits the send request frame. The reception information updating unit can manage the nodes from which a response has been received by updating the information in the response instruction data when a response is received from the node to indicate that a response is no longer required from a node indicated as requiring a response. More specifically, changing the corresponding bit of the node in the response instruction data 24 from "1" to "0" makes it possible to manage from which of the nodes a response has been received.

The target designation unit 121 specifies (determines) which nodes are required to respond in the send request. For instance, when the first transmitting a send request, the target designation unit 121 may determine that all nodes belonging to the same group are required to respond, or may determine that only some of the nodes are required to respond. When a response is not received from some of the nodes and the request is resent, the target designation unit 121 may select that only the nodes from which no response was received are required to respond.

The commanded generator 122 generates the send request frame 20. The response instruction data 24 in the send request frame 20 may be generated on the basis of the nodes identified by the target designation unit 121. More specifically, the bits corresponding to nodes that must respond are set to one "1" (indicating a response is required), and all other bits are set to "0" (indicating a response is not required) when generating the response instruction data. When a request is resent, the response instruction data may be generated using updated information from the reception information updating unit 115.

The command transmitter 123 encodes and modulates the send request, for instance and transmits the encoded request wirelessly.

The unresponsive node output unit 124 outputs information identifying the nodes that have not responded despite repeating retransmission of the send request a predetermined number of times. When a proper response is not received from a node despite retransmitting the send request a predetermined number of times, that node may be considered as having a malfunction. The output from the unresponsive node output unit 124 can be used to provide notice of this kind of malfunction.

### The Node

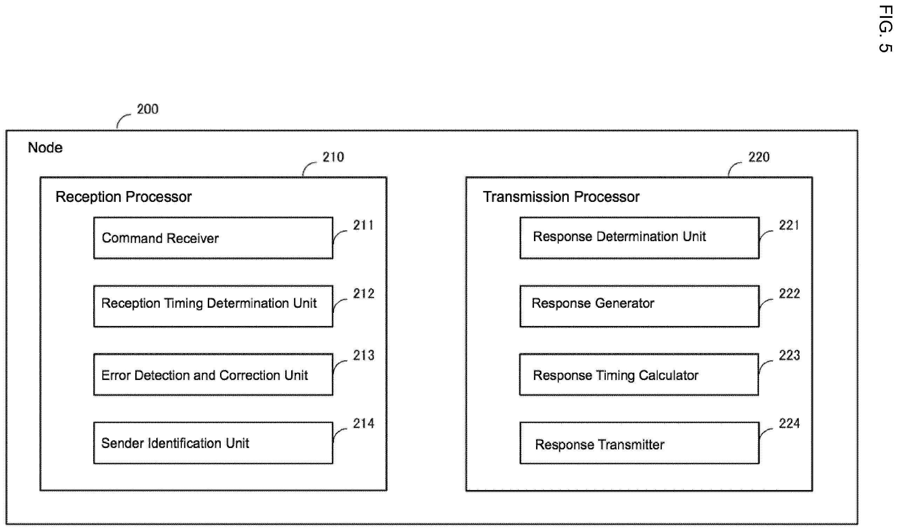

Next, the configuration of the node 200 is described with reference to FIG. 5. A node 200 includes a reception processor 210, and a transmission processor 220. The reception processor 210 includes a command receiver 211, a reception timing determination unit 212, an error detection and correction unit 213, and a sender identification unit 214. The transmission processor 220 includes a response determination unit 221, a response generator 222, a response timing calculator 223, and a response transmitter 224. In the embodiment, the node 200 is a computer containing a central processing unit (CPU), and memory, and the like, and is capable of implementing each of the above-mentioned functions through the CPU executing a program stored in memory. However, the above mentioned functions may be implemented in whole or in part as hardware circuits.

The command receiver 211 filters, demodulates, and decrypts the wireless signals received via antenna to receive the data transmitted wirelessly thereto. On receiving a send request from a base transceiver 100, the command receiver 211 identifies the request from the base transceiver 100 on the basis of the command code 23 included in the frame received. When it is clear that the command sent from the base transceiver 100 requests transmission of sensor data (i.e., send request command), the node prepares to acquire the sensor data and transmits the following response to the base transceiver 100.

The reception timing determination unit 212, the error detection and correction unit 213, and the sender identification unit 214 are identical to the corresponding components in the base transceiver 100; therefore, an explanation therefor is omitted.

The response determination unit 221 assesses whether or not the node should provide a response on the basis of the response instruction data 24 included in the send request frame. More specifically, the response determination unit 221 determines a response is required if the value of the data corresponding to the node ID for the node is "1", and determines to ignore the request if the value is "0".

The response generator 222 generates the response frame 30. If the group ID 32 in the send request frame includes the ID of the group to which the node belongs, then the node ID of the node is stored in the node ID 33 in the response frame, and the sensor data is stored in the data 34 in the response frame.

The response timing calculator 223 calculates when the response frame 30 generated is sent. As above described, the response instruction data 24 designates the sequence in which the node should respond. The response timing calculator calculates the time at which the response should be transmitted on the basis of this order. More specifically, if the node is instructed to be the Nth node to transmit a response (N is an integer), the response timing is calculated as a time (N-1) × Ts + N × GT after the send request was received; where Ts is the transmission time of the child node, and GT is the guard time.

The response transmitter 224 sends the response frame 30 generated by the response generator 222 at the timing calculated by the response timing calculator 223. The response transmitter 224 encodes and modulates the response frame 30 and transmits the encoded and modulated response frame wirelessly.

### Processing

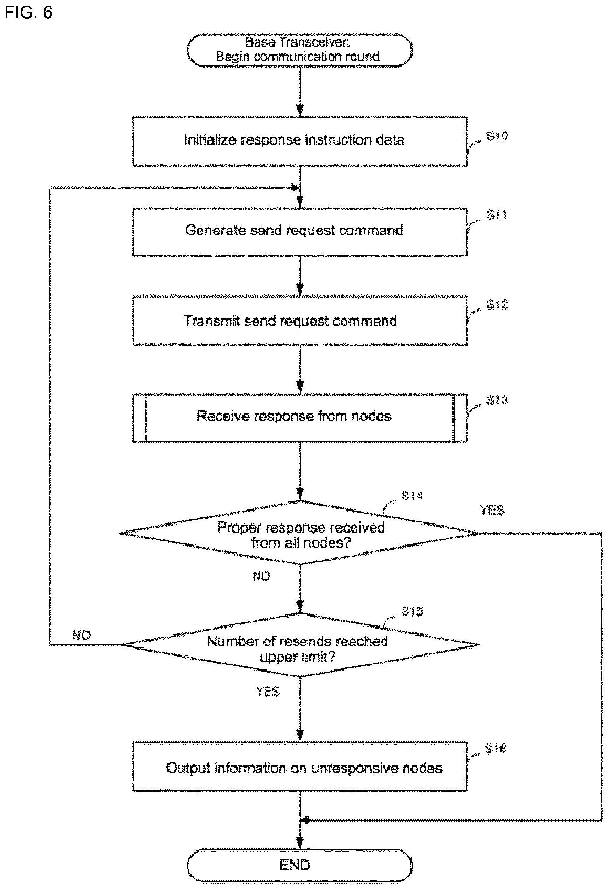

The process used in the base transceiver 100 to transmit a send request, and in a node 200 to send a response in relation to the send request is described with reference to the flowcharts in FIG. 6 through FIG. 9.

### Transmission of the Send Request Command from the Base Transceiver

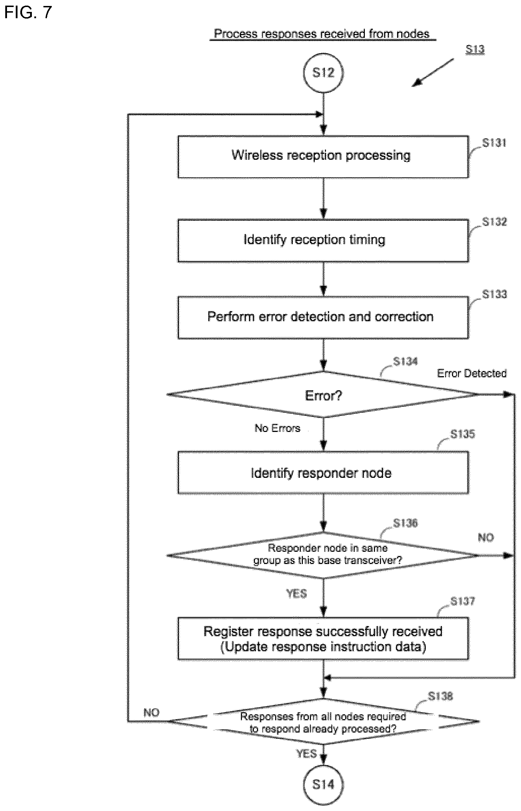

First the process when the base transceiver 100 transmits a send request command is described with reference to FIG. 6 and FIG. 7. When a communication round for the base transceiver begins, the target designation unit 121 specifies the nodes that must respond in the send request, and the response instruction data 24 is initialized on the basis of the send request. Here, the case where the base transceiver 100 requests all the nodes 200 to transmit a response is described as an example. Accordingly, all the bits in the response instruction data 24 are set to "1" indicating a response is required.

The command generator 112 generates a send request frame 20 including the response instruction data 24 (S11), and the command transmitter 123 broadcasts the send request frame 20 (S12). Once the send request frame 20 is transmitted, the base transceiver 100 receives the responses from the nodes via the reception processor 110 (S13).

FIG. 7 is a flowchart depicting the particulars of step S13, i.e., the processing performed by the base transceiver when receiving the responses from the nodes. First, the response receiver 111 receives the wireless signals (S131). The reception timing determination unit 112 specifies the time slot for which the reception processing is being performed. The error detection and correction unit 113 detects whether the reception signals include an error, and attempts to correct the error if there is one (S133).

If the data received includes an error and the error is uncorrectable (S 134: Error detected), the processing continues to step S 138 without further processing the data received. Whereas, if there is no error in the data received or if the error has been corrected (S134: No errors), processing continues to step S135. In step S135 the sender identification unit references the group ID 32 and the node ID 33 included in the data received, to identify the sender of the request (S135), and determines whether or not the sender is a node 200 belonging to the same group as the base transceiver 100 (S136). If the data includes a different group ID 32 (S 136: NO), no more processing is performed. If the group ID 32 is a match (S136: YES), the reception information updating unit 115 records that a response was successfully received from the node (S137). The reception information updated unit 115 maintains information identical to the response instruction data 24 included in the send request frame 20, and updates the bit corresponding to the node from which a response was successfully received to "0". That is, given that retransmission is not required from a node from which a response was successfully received, the bit value of the node in the response instruction data is updated to a value indicating that no response is required.

It is then determined whether the processing of responses from all the nodes required to respond is complete (S138); if incomplete (S138: NO), processing returns to step S131 and if complete (S138: YES), processing of the responses received terminates and processing continues to step S 14. The determination of whether or not responses were processed from all the nodes can be performed by determining whether or not the amount of time (time slots) elapsed corresponds to the number of nodes from which a response is required.

Once the processing of the responses received from the nodes is completed, processing continues to step S14, the target designation unit 121 determines whether responses were properly received from all the nodes requested to respond. This determination may be carried out by verifying the response instruction data updated by the reception information updating unit 115. Accordingly, if the value of all the bits in the updated response instruction data is "0", then it can be understood that a response was properly received from all the nodes. In this case (S14: YES), the base transceiver 100 terminates the processing of the send request.

In contrast, if any of the bits in the updated response instruction data has a value of "1", it can be understood that a response was not properly received from the node corresponding to that bit. In this case (S14: NO), a send request is retransmitted to the nodes from which a response was not properly received, requesting a response be resent. More specifically, after confirming that the number of resends is yet to reach an upper limit (S15), the processing in step S11 through step S14 are executed again. When generating the send request frame, the response instruction data updated by the reception information updating unit 115 is included as is in the send request frame to generate a send request frame specifying the nodes from which retransmission is required.

Although the expectation is that repeating retransmissions multiple times makes it possible to properly receive a response from all the nodes, a response may not be received from a node regardless of the amount of time when, for instance, the node is malfunctioning. When a node does not send a response despite retransmitting up to a predetermined upper limit, the unresponsive node output unit 124 outputs information specifying that node. The information specifying an unresponsive node is essentially setting the bit corresponding to that node to "1" in the response instruction data at that time. Accordingly, the unresponsive node output unit 124 may simply output the response instruction data at that time to serve as information specifying unresponsive nodes.

### Transmission of Response from Nodes

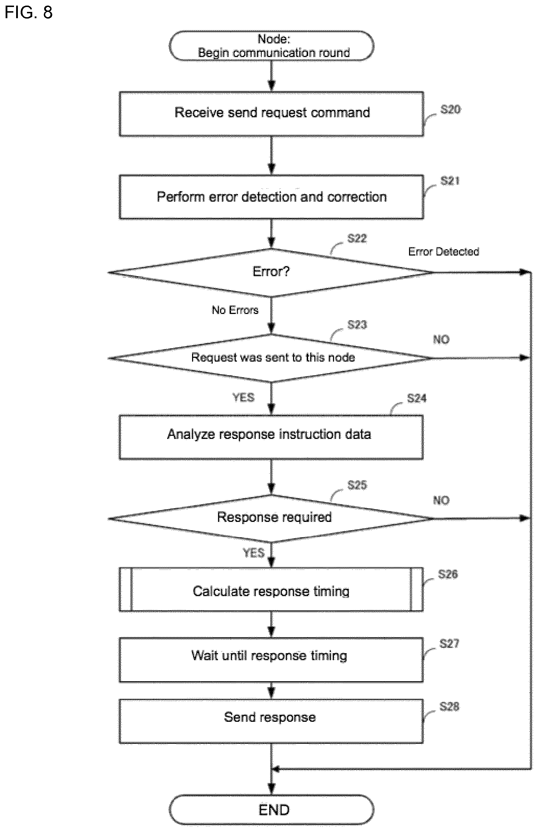

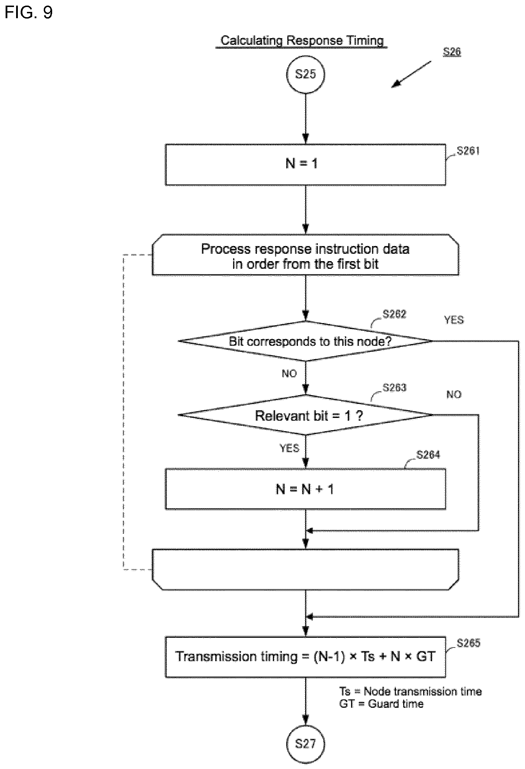

Next, the processing for a node 200 sending a response is described with reference to FIG. 8 and FIG. 9. The command receiver 211 in a node 200 receives a send request frame 20 from a base transceiver 100 and filters, demodulates, and decrypts the send request frame 20 (S20). The error detection and correction unit 213 detects whether the reception signals include an error, and attempts to correct the error if there is one (S21).

If the data received includes an error and the error is uncorrectable (S22: Error detected), there is no further processing of the data received. Whereas, if there is no error in the data received or if the error has been corrected (S22: No errors), processing continues to step S23. In step S23, the node determines whether the node itself is the destination for the send request received. More specifically, the node investigates whether the group ID 22 in the send request frame 20 is identical to the ID of the group to which the node belongs, and determines that the node itself is the destination for the send request received if the IDs are identical. If the send request is not directed to the node itself (S23: NO), there is no further processing of the data received; and if the send request is directed to the node itself (S23: YES), processing continues to step S24.

In step S24, the response determination unit 221 references the response instruction data 24 included in the send request frame 20, and determines whether or not the node itself should provide a response to the send request. More specifically, it is determined that a response is required if the bit in the response instruction data 24 that corresponds to the node is "1", and that the send request can be ignored if the bit is "0". When a response is not required (S25: NO), no further processing takes place, and when a response is required (S25: YES), processing continues to step S26.

In step S26, the response timing calculator 223 calculates the timing for the node to transmit a response on the basis of the response instruction data 24. In the embodiment, the response timing is determined based on the sequence of the bit indicating that the node is required to respond among the bits in the response instruction data indicating the nodes required to respond. The calculation of the response timing is described with reference to the flowchart in FIG. 9. First, a variable N expressing the order of a response is initialized to "1" (S261). The response instruction data 24 is processed in order from the first bit, incrementing the variable N by one when at a bit not corresponding to the node itself is a value "1" (S262: NO and S263: YES). On reaching the bit corresponding to the node itself (S262: YES), the loop is exited, and the value of the variable N at that point is determined as the order of the node itself. For instance, when the response instruction data 24 is "1000100100" as illustrated in FIG. 3(A), when the node ID of the node is "5", by the first bit, the variable N is incremented two times, and does not change for the second through fourth bits; therefore, it is determined that the node itself is to respond second.

Thereafter, in step S265, the response timing is determined from the response order. More specifically, the timing of the transmission is calculated as (N-1) × Ts + N × GT after the send request is received, where Ts is the transmission time of the node, and GT is the guard time (collision prevention time). Note that although the transmission time Ts, and the guard time GT may differ based on implementation, these are predetermined values.

The response transmitter 224 waits until the response timing arrives (S27), and transmits the response frame 30 once the response timing arrives. Note that the response generator 222 may generate a response frame 30 that will be transmitted between the time it is determined that a response transmission is required from the node itself until the response timing.

### Functions and Effects of the Embodiment

In the embodiment, whether or not a response is required and the response timing is specified for each of the nodes when the base transceiver transmits a send request to the nodes. The response timing for each node is determined at this time to prevent any overlap in the response timing as well as avoid any slots where no response is sent; therefore, response from the nodes can be obtained with minimum delay. Additionally, the base transceiver specifies the response timing for each of the nodes, and thus the response timing is not selected at random, thereby ensuring communications are reliable. Finally, given that it is sufficient to use a single bit to represent a single node in the response instruction data, the data overhead can be kept to a minimum by adopting this method.

### Modification Examples

The embodiment described above is provided merely as an example of the invention; the invention is not limited to the specific example above described. The invention may be modified in various ways within the scope of the technical ideas therein.

In the above description, the nth bit in the response instruction data indicated whether or not a node with the node ID "n" was required to respond; however, this is not required. As long as a bit is mapped to a node, any desired relationship may be used. Furthermore, any desired implementation may be used; for example, the first bit could indicate whether or not a node with the node ID "10" is required to respond, the second bit could indicate whether or not a node with the node ID "9" is required to respond and so forth. In the above description a bit value of "1" indicated a response was required, and a bit value of "0" indicated a response was not required; however the reverse may be used instead.

In the above description the assumption is that the number of nodes does not change; however, the number of nodes may increase or decrease during operation. In this case, the response instruction data may be a fixed length with the number of bits identical to the maximum number of nodes. Alternatively, the response instruction data may have variable length. If the response instruction data is of variable length, preferably, information is added thereto indicate the number of bits therein.

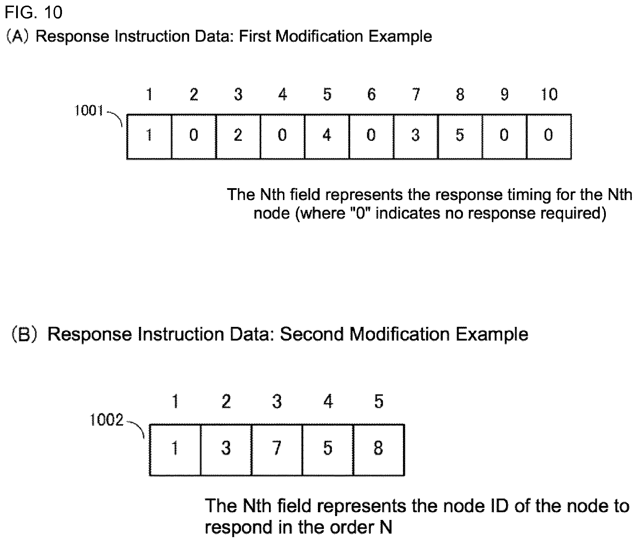

In the above description, a single bit in the response instruction data specifies for a single node whether or not a response is required; however, whether or not a response is required for a single node may be expressed in a plurality of bits. For instance, as illustrated in FIG. 10(A), a field of a plurality of bits is assigned to a single node, and within each field the response sequence is specified in the field corresponding to the node. The response instruction data 1001 illustrated in FIG. 10(A) is made up of a plurality of fields (here there are 10) and each field includes a plurality of bits. The nth field represents the response sequence for a node with the node ID "n"; if the field value is "0", then a response is not required. The example response instruction data 1001 in FIG. 10(A) indicates that the nodes with node IDs 1, 3, 7, 5, 8 are to respond from first to fifth respectively, and no response is required from the other nodes. The base transceiver can specify the response timing of the nodes even when the response instruction data is configured in this manner. In this case, when the number of nodes from which a response is required is N, preferably, the response timing for a node is selected from 1st to Nth (the 1st to the Nth slots after the send request) to prevent an overlap in the response timing of all the nodes. When the modified example is configured in this manner, the delay in the responses can be kept to a minimum identically to the above-described embodiment. While the size of the response instruction data used in the modified example is a larger compared to the above described embodiment, the advantage is that the response timing can be more flexibly determined.

Furthermore, as illustrated in FIG. 10(B), the response instruction data may be configured to specify which of the nodes should respond in the Nth order. Here the node IDs of the nodes from which a response is required is stored in the response instruction data 1002 illustrated in FIG. 10(B). At this time, the node IDs are stored in order from the node that is ahead in the response sequence. The node IDs of the nodes from which a response is not required are not stored in the response instruction data. The response instruction data 1002 illustrated in FIG. 10(B) represents the same information shown in FIG. 10(A). This kind of technique provides the same effects as the above described FIG. 10(A).

While the above-described embodiment is provides an example of adopting the techniques of the invention in a sensor data transmission system constituted by a PLC and sensors, the techniques in the invention may be adopted in any desired system. For instance, the present invention may be suitably adopted in an RFID system where an RFID reader-writer that uses passive UHF or RFID technology is the base transceiver, and the RFID tag is the node. Techniques in the invention are not limited to the above and can be applied to any desired wireless communication system.

### Reference Numerals

- 20: Send request frame
- 23: Command code
- 24: Response instruction data
- 100: Base transceiver (PLC)
- 110: Reception processor
- 111: Response receiver
- 112: Reception timing determination unit
- 113: Error detection and correction unit
- 114: Sender identification unit
- 115: Reception information updating unit
- 120: Transmission processor
- 121: Requester identification unit
- 122: Command generation unit
- 123: Command transmitter
- 124: Unresponsive node output unit
- 200: Node (sensor)
- 210: Reception processor
- 211: Command receiver
- 212: Reception timing determination unit
- 213: Error detection and correction unit
- 214: Sender identification unit
- 220: Transmission processor
- 221: Response determination unit
- 222: Response generator
- 223: Response timing calculator
- 224: Response transmitter

## Claims

1. A wireless communication system comprising: a parent node and a plurality of child nodes, the wireless communication system for carrying out wireless communication between the parent node and the child nodes,
the parent node including:
a generation unit configured to generate a send request including response instruction data specifying the child nodes required to respond, and a response timing for each of the child nodes required to respond; and
a transmission unit configured to transmit the send request;
the child node including:
a reception unit configured to receive the send request;
a response determination unit configured to determine from the response instruction data whether or not the child node itself is required to respond to the send request; and
a response transmission unit configured to transmit a response at a response timing based on the response instruction data, when the child node is required to respond to the send request.

2. The wireless communication system according to claim 1, wherein when the number of child nodes required to respond is N (where N is an integer), the timing at which the child node should respond is any one of 1 to N slots after the send request and does not overlap with the response timing for any of the child nodes required to respond.

3. The wireless communication system according to claim 2, wherein the response instruction data lists data representing whether or not a response is required for each of the child nodes in order in accordance with individual identification information for each of the child nodes.

4. The wireless communication system according to claim 3, wherein the timing at which the child node should respond is determined on the basis of the order in which the data representing that the child node is required to respond is presented in the data representing that a response is required.

5. The wireless communication system according to any one of claims 2 to 4, wherein when the parent node does not receive a response from a child node, the parent node retransmits a send request including response instruction data specifying that the child node is a child node required to respond for up to N slots after a send request is transmitted.

6. The wireless communication system according to claim 5, wherein the parent node:
on receiving a response from a child node after transmitting a send request, updates the response instruction data to indicate that a response is not required from said node; and
when retransmitting a send request, includes the updated response instruction data in the send request.

7. The wireless communication system according to claim 6, wherein when there is a child node from which a response is not received despite repeating retransmission of a send request a predetermined number of times, the parent node uses the response instruction data to output from which of the child nodes a response has not been received.

8. A wireless communication device functioning as a child node that wirelessly transmits a response on the basis of a send request from a parent node, the wireless communication device comprising:
a receiving unit configured to receive a send request including response instruction data specifying child nodes required to respond, and a response timing for each of the child nodes required to respond;
a response determination unit configured to determine from the response instruction data whether or not the child node itself is required to respond to the send request; and
a response transmission unit configured to transmit a response at a response timing based on the response instruction data, when the child node is required to respond to the send request.

9. The wireless communication device according to claim 8, wherein the response instruction data lists data representing whether or not a response is required for each of the child nodes in order in accordance with individual identification information for each of the child nodes; and
the response determination unit determines whether or not a response to the send request is required on the basis of the data corresponding to the individual identification information of the child node itself included in the response instruction data.

10. The wireless communication system according to claim 8 or 9, wherein a response timing is determined on the basis of the order in which the data representing that the child node itself is required to respond is presented in the data representing that a response is required in the response instruction data.

11. A wireless communication device functioning as a parent node that wirelessly transmits a send request to a plurality of child nodes and receives a response, the wireless communication device comprising:
a generation unit configured to generate a send request including response instruction data specifying the child nodes required to respond, and a response timing for each of the child nodes required to respond; and
a transmitting unit configured to transmit the send request.

12. The wireless communication device according to claim 11, wherein when the number of child nodes required to respond is N (where N is an integer), the timing at which the child node should respond is any one of 1 to N slots after the send request and does not overlap with a response timing for any of the child nodes required to respond.

13. The wireless communication device according to claim 12, wherein the response instruction data lists data representing whether or not a response is required for each of the child nodes in order in accordance with individual identification information for each of the child nodes; and
the generation unit generates a send request including response instruction data that sets the data corresponding to a child node required to respond to the send request to a value indicating that a response is required.

14. The wireless communication device according to claim 12 or 13, wherein when the wireless communication device does not receive a response from a child node, the wireless communication device retransmits a send request including response instruction data specifying that the child node is a child node required to respond for up to N slots after a send request is transmitted.

15. The wireless communication device according to claim 14, wherein on receiving a response from a child node after transmitting a send request, the wireless communication device updates the response instruction data to indicate that a response is not required from said node; and
when retransmitting a send request, includes the updated response instruction data in the send request.

16. The wireless communication device according to claim 15, wherein when there is a child node from which a response is not received despite repeating retransmission of a send request a predetermined number of times, the wireless communication device uses the response instruction data to output from which of the child nodes a response has not been received.

17. A wireless communication method in a wireless communication system for carrying out wireless communication between a parent node and a plurality of child nodes, the method comprising:
the parent node generating a send request including response instruction data specifying the child nodes required to respond, and a response timing for each of the child nodes required to respond;
the parent node transmitting the send request;
the child node receiving the send request;
the child node determining from the response instruction data whether or not the child node itself is required to respond to the send request; and
the child node transmitting a response at a response timing based on the response instruction data, when the child node is required to respond to the send request.

18. A wireless communication method carried out in a wireless communication device functioning as a child node that wirelessly transmits a response on the basis of a send request from a parent node, the method comprising:
receiving a send request including response instruction data specifying child nodes required to respond, and a response timing for each of the child nodes required to respond;
determining from the response instruction data whether or not the child node itself is required to respond to the send request; and
transmitting a response at a response timing based on the response instruction data, when the child node is required to respond to the send request.

19. A wireless communication method carried out in a wireless communication device functioning as a parent node that wirelessly transmits a send request to a plurality of child nodes and receives a response, the method comprising:
generating a send request including response instruction data specifying the child nodes required to respond, and a response timing for each of the child nodes required to respond; and
transmitting the send request.

20. A program for executing on a computer, each of the steps in the wireless communication method according to claim 17.

21. A program for executing on a computer, each of the steps in the wireless communication method according to claim 18.

22. A program for executing on a computer, each of the steps in the wireless communication method according to claim 19.
